# EUROPEAN PATENT SPECIFICATION

(11) **EP 1 429 512 B1**
(45) Date of publication and mention of the grant of the patent: **28.03.2007**
(21) Application number: 02080168.4
(22) Date of filing: 10.12.2002
(51) Int. Cl.: H04L 29/06, H04Q 7/24, H04Q 7/22

(54) **Telecommunicationsystem and method for transmitting video data between internet and a mobile terminal**
Telekommunikationssystem und Verfahren zur Übertragung von Videodaten zwischen Internet und einem Mobiltelefon
Système de télécommunication et procédé pour la transmission de signaux vidéo entre Internet et un terminal mobile

(43) Date of publication of application: 16.06.2004
(73) Proprietor: Nokia Corporation, 02150 Espoo (FI)
(72) Inventor: Bais, Michel Alexander, 1601 BB Enkhuizen (NL); Schramp, Rudi, 2497 CD The Hague (NL); Klok, Frederik Harm, 2645 GZ Delfgauw (NL); Selgert, Franklin, 2651 BL Berkel En Rodenrijs (NL)
(74) Representative: Schippan, Ralph

(56) References cited:
- EP-A- 1 001 581
- WO-A-00/25486
- US-A- 5 961 589

## Description

### Field of the Invention

The invention refers to a system and a method for transmitting streaming video content from a streaming video server within the internet to mobile terminals. The invention refers also to a gateway to be used for the transmission of streaming video content to mobile terminals.

### Background of the Invention

Due to a slow standardization process, the first UMTS terminals will not contain a standardized solution for packet switched video and audio streaming. At this moment known vendors offer proprietary platforms for both UMTS and GPRS streaming services. Investing in these proprietary platforms cause customer lock in because upgrading towards standards is needed in the future.

In WO 00/25486 a method and apparatus for distributing an audio or video information is disclosed, wherein a source of the audio or video information is connected to a voice network and the format of the audio or video information is transformed into the transmission format of the voice network and selectively supplied to a subscriber line by a switching operation, and wherein a controlling computer is connected to a switching means for controlling said switching operation.

### Summary of the Invention

The invention presents a telecommunication system comprising, for the transmission of streaming video content from a streaming video server within the internet to mobile terminals, a gateway, connected to the circuit switched network at the one side and connected to the internet at the other side, said gateway being fit for the conversion of files having an internet compatible streaming video format received from said internet streaming video server, into streaming video bitstreams in a format fit to be transmitted to the mobile terminals via the circuit switched network, and wherein said telecommunication system comprises registration means, connectable with said mobile terminals via a packet switched network and fit for registering, for each relevant mobile terminal, a terminal identifier linked to the mobile terminal's node address at the circuit switched network.

As nowadays there are no standard protocols to have such a conversion gateway communicate with mobile terminals, as a preferred option use may be made of a standardised protocol for videoconferencing between mobile terminals. It is noted that such a videoconferencing protocol is meant and developed to be used in architectures wherein two or more users, having videoconferencing enabled mobile phones, may videoconferencing with each other.

To be able to use such a videoconferencing protocol for downloading streaming video content from an internet server or dient to mobile terminals, the mobile terminals and the gateway at the side of the circuit switched network preferrably are fit for exchanging video bitstreams complying the relevant protocol for phone-to-phone videoconferencing. The ITU H.324M videoconferencing protocol may be very fit for the intended purpose.

One aspect of the invention is to use a protocol, standardised for phone-to-phone videoconferencing, for the enabling of downloading streaming video content originated by internet content services to mobile terminals, which lies within a quite different technical field.

To be able to manage the mobile terminal addresses to which the streaming files have to be targeted via the circuit switched network after conversion in the gateway, the system preferrably comprises registration means, connectable with said mobile terminals, e.g. via said packet switched network, and fit for registering, for each relevant mobile terminal, a (preferably unique) terminal identifier which is linked to the mobile terminal's node address in the circuit switched network.

On requesting certain content from the content service, the terminal may send, attached to that request, its terminal identifier, which may be used to direct the requested content to be downloaded -via the circuit switched network- to the right circuit switched network address (connecting node) of the requesting mobile terminal. To that end, the system may comprise means for retrieving, at the registration means, the circuit switched network node address of the right (viz. the relevant content requesting) destination terminal, guided by the terminal identifier of the mobile terminal requesting for the streaming video content at the streaming video server, and means for transmitting said streaming video content, converted into streaming video bitstreams by said gateway, to the retrieved circuit switched network node address.

There are two options for setting up -after retrieval of the right terminal address and before the transmission of the streaming content to the right terminal address- a connection through the circuit switched network between the gateway and the right destination terminal viz.
- the gateway may originate a call to the terminal of which the node address was retrieved in the registration means, or (in opposite direction)
- the terminal may originate a call to the gateway and the gateway investigates whether the originating terminal is the right one by matching the calling terminal's CLI (equal to its node address) with the node address which was retrieved in the registrataion means.

### Brief Description of the Drawings

Figure 1 depicts a preferred system architecture.
Figure 2 shows an exemplary implementation of the H.324M Gateway.

### Detailed Description of the Drawings

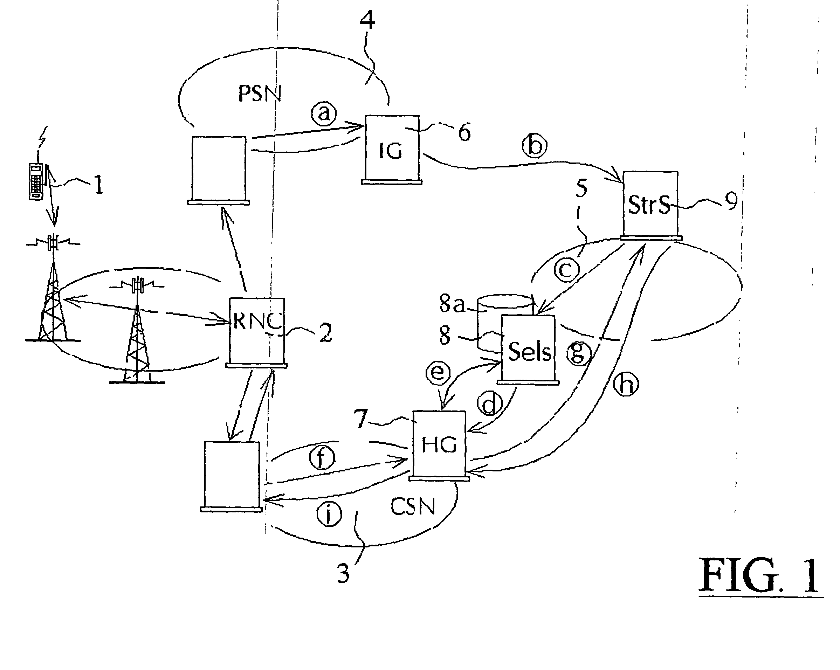

In figure 1 terminals 1 are connectable, via base stations and a "Radio network Controller" (RNC) 2, with a circuit switched network (CSN) 3 and a packet switched network (PSN) 4. Via the packet switched network 4 the terminals 1 can browse the internet 5, viz. via an internet gateway (IG) 6. For the transmission of streaming video content from a streaming video server 9 within the internet 5 to the mobile terminals 1, a gateway 7 is connected to the circuit switched network 3 at the one side and the internet 5 at the other side. The gateway 7 is fit for the conversion of files having an internet compatible streaming video format, received from said streaming video server 9, into streaming video bitstreams in a format fit to be transmitted via the circuit switched network to the mobile terminals.

The mobile terminals 1 and the gateway 7 (at said one side) are fit for exchanging video bitstreams complying with a protocol which was, up to now, only applied for phone-to-phone videoconferencing, but which is applied now for gateway-to-phone communication. This videoconferencing related protocol preferrably is the ITU H.324M protocol.

To be able to route the streaming files in the circuit switched network to the right terminal or node address after their conversion in the gateway, the system comprises registration means which are connectable with said mobile terminals 1 via said packet switched network 4 and which are fit for registering, for each relevant mobile terminal, a terminal identifier linked to the mobile terminal's node address at the circuit switched network. In figure 1 the registration means may be formed by an internet selection server 8. The selection server 8 comprises a database 8a, in which -via an initial user/terminal registration process for each user or terminal- unique terminal identifiers are stored which are linked to the relevant calling number or "calling line identifiers" (CLIs) of the terminals, valid for calling them via the circuit switched network. In most cases, during said initial registration process, the terminal user has to input that calling number via the terminal's keypad. The unique terminal identifier may be generated automaticly by the terminal itself, e.g. by the terminal's SIM card, or by the gateway 6. After the registration process, only the unique (non-CLI) terminal identifier needs to be used within the internet, viz. by the streaming video server 9.

After having selected, at the streaming server 9, some video content, this content has to be routed to the right (requesting) terminal, viz. the terminal which is linked to the relevant unique terminal identifier, received by the content server 9.

The selection server 8 comprises means for retrieving, in the dababase 8a, the right circuit switched network node address (CLI) under control of the terminal identifier sent to the content server 9 while requesting for the streaming video content.

Server 9 will process the requested content by downloading it to the gateway 7 between the internet and the circuit switched network 3, labeling the downloaded content with the CLI of the requesting terminal 1. The CLI has previously been retrieved at the selection server 8.

While or after downloading the content to the gateway 7, a connection has to be set up via the circuit switched network 3, between the gateway 7 and the right destination terminal 1. There are two options for setting up such a connection.

In a first option the gateway 7 originates a call through the circuit switched network to the terminal 1 of which the node address (CLI) was retrieved in the selection server 8 (read from the "CLI label" of the content stream) and, subsequently, transmits the converted content to that terminal.

In a second option the terminal 1 originates a call to the gateway 7 and the gateway 7 investigates whether the originating terminal 1 is the right destination terminal, viz. by matching the originating terminal's CLI, detected via the circuit switched network, with the CLI as was retrieved in the selection server 8 (detected from the "CLI label" of the video stream). If both CLIs match, the gateway 7 will download/stream the content to the calling terminal 1.

Finally, the process will be outlined step-by-step
Step a: Browsing on the internet via mobile terminal 1 with H.324M capabilities and the internet gateway 6 of a service provider or operator.
Step b: Selection of a video URL for H.324M phones 1 on third party Streaming Server 9. This may be a free video server requiring no payment by the user.
Step c: The link points to the Selection Server 8 of a video portal containing the video selected and possible any kind of registration key, e.g. http://www.myshots.nl?movie =http://www.cartoons.nl/cartoons/dilbert.wmv&key=1243wdft67
Step d: The selection server 8 notifies the H.324M gateway 7 to set up a call guided by the unique ID stored -via the initial subscription process- in the ID-CLI database 8a.
Step e: With the unique ID the H.324M gateway 7 retrieves the relevant CLI from the selection server 8.
Step f: The H.324M gateway 7 initiates a H.324M connection with the retrieved CLI. As an alternative, the relevant terminal may intitiate the call, which is investigated by gateway 7 by means of CLI-matching.
Step g: The H.324M gateway 7 makes an internet connection with the streaming server 9 via the URL (http://www.cartoons.nl/cartoons /dilbert.wmv &key=1243wdft67).
Step h: The streaming server 9 streams the content to the H.324M gateway 7.
Step i: The gateway 7 repackages (converts) the content stream according the H.324M protocol and sends it to the mobile terminal 1 via the circuit switched network 3.

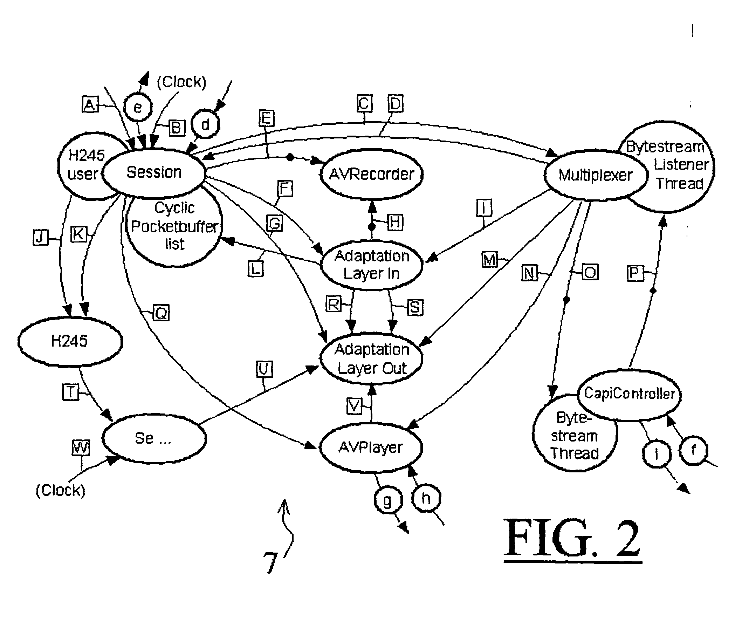

Finally, an exemplary software implementation of the H.324M Gateway will be described and shown in figure 2. Figure 2 contains following labels:
- A: StartThread
- B: Initiate
- C: Set/ClearMuxEntryln
Set/ClearMuxEntryOut
SetMuxPriorities
HangUpCall
- D: CallHungUp
- E: SetWriteAudio
SetWriteVideo
- F: SetSDU
lnitCPBufferListener
Open.../Close...
- G: Open.../Close...
SetLogicalParamOut
IsChannelOpen
EncodeAndSendLayer1 SDU
- H: WriteAudio
WriteVideo
- I: RxDataToAlSDU
RxDataToAIPDU
- J: DoSend
GetAlOut
- K: DispatchASN1 Message
- L: BufferNotEmpty
- M: GetSDU
GetLayerType
GetCurrentSDUSize
IsChannelOpen/Segmentable
- N: TimerPlayerEvent
- O: SendData
- P: DataReceived
DataRequested
HungUp
- Q: IntraStart/StopPlayer
DetermineVideoRate
SetCapabilities
- R: (Control)
ResetSRP
PutPDU
- S: (Video)
Retransmit
PutPDU
- T: DoRecord
- U: EncodeAndSendLayer1 SDU
- V: SendLayer2SDU
SendLayer3SDU
- W: H245-timer

### H.324M Software discription

### CODING PRINCIPLES

Some principles that we used-(on-many places, though not everywhere):
- one class is in one .h file plus one .cpp file, with the same filename as the class.
- parameters start with an f, global variables with g, real constants with c. Local variables can start with I. Attributes (class data members) start with an a.
- class names start with an Uppercase letter. Function, parameter, and variable names start with a lowercase letter.
- for booleans, we use BOOL, TRUE and FALSE. And not other spellings that would mean the same (because they have slightly different implementations).
- pieces of code that need attention (because of "dirty" or "lazy" programming) are marked with two @-signs (@@).

### GENERAL STRUCTURE

The "MMM.EXE" source code consists of 3 main sections, each defined as a "project" in MS Visual C++:
- H245
- H245codec
- MMM

H245 and H245codec are libraries that are linked together with MMM. This is for practical reasons: the H245 message syntax (H245codec) and the message logic (H245) have been developed separately. For historical reasons, some source code refers to "Arena", an old name for the MMM application.

### GLOBAL (HELPER) CLASSES

For general purposes we have some handy classes:
EString - a "better" version of CString
IniFile - a class to read and parse the MMM configuration file
SessionLog, Log - classes to enable logging with context information, in a multi-threading program
SafeFile - a thread-safe i/o file class
TimerHandler, TimerObject - classes for timers (mainly H245 timers)

### THREADS

To encapsulate Microsoft's way of a multi-threading program, we made our own thread library. Basically a Thread is a separate piece of code that can only communicate with other Threads by using a ThreadProxy to send a Message. Each Thread has its own message queue, from which it reads messages (FIFO), while also handling timer events in between. When a Message is sent from one Thread to another, this Message can contain data as parameters. A ThreadProxy takes care of the packing and unpacking of the parameters. If the caller-Thread needs return values from the callee-Thread, the data is encapsulated in an OutputParameter. The

ThreadProxy will wait till this OutputParameter is filled, i.e. till the Message has been handled by the callee-Thread. This way we can implement a synchronous call between Threads. For different data types we need different OutputParameter classes. Currently, the following have been defined: StringArrayOutputParameter, IntegerOutputParameter, PointerOutputParameter. The program "TestThread" is an example of how threads are used.

### H245CODEC

The H245 coded is entirely programmed in C++, i.e. there is no ASN.1 parser or anything like that involved. The entire interface of the H245 codec software is in h245asn1.h, while the implementation is in various cpp files. In this case we broke the rule that every class should have its own .cpp file and its own .h file.

The low-level packing and unpacking of bits is done in the class BitBufferManager. On top of that, the H245 syntax is regarded as a Field containing Fields. A Field is something we can encode or decode. These 2 functionalities are in one method: "endecode". The reason for this is that most implementations for encoding and decoding are identical (consisting of calls to "endecode" of the subfields).

Some basic H245 buliding blocks are implemented as classes:
LengthDeterminant, Extension, SequenceExtension, ChoiceExtension,
BooleanField, NumberField, ConstrainedInteger, NormallySmallinteger,
OctetString, GeneralString, IA5String, OpenField
With these building blocks we made constructions that often occur:
ChoiceField, ChoiceFieldWithoutExtension, ChoiceFieldWithExtension,
ChoicelndexField, ChoicelndexFieldWithExtension,
SequenceFieldWithExtension, ArrayField.

All other H245 classes are defined by inheriting from the above classes. The main H245 message is a MultimediaSystemControlMessage. This is a ChoiceFieldWithExtension, where the choice is one of the following: RequestMessage, ResponseMessage, CommandMessage, IndicationMessage. These messages in turn are composed of sub-fields, literally following the H245 standard (and the mobile extensions that we need). Implementation of all these H245 messages has been quite some typing work. To keep the source code as small and simple as possible, some C macros were defined.

Sometimes we need to be able to copy a Field into another. *Only* for those classes where we needed them, we defined operator=() methods.

### H245

The logic of the H245 protocol is simulated using objects H245, H245User, and Se*** (SeBlcl, SeBlcO, SeCel, SeCeO, SeClcl, SeClcO, SeLcl, SeLcO, SeMII, SeMIO, SeMrl, SeMrO, SeMsd, SeMtI, SeMtO, SeRmel, SeRmeO, SeRtd). These objects send messages to each other, but these are in fact just synchronous function calls. The H245User class is an interface class: the implementation of its functions is in the "Session" class.

The Se*** classes all inherit from a generic class Se. This class has helper functions for tracing and encoding.

### CAPI

CAPI is a standard library for addressing ISDN cards (http://www.capi.org). The ansi C library is intended for single threaded applications on a wide range of platforms with very detailed controll on all aspects of ISDN. The CAPI classes in the H324m server are an encapsultation of the CAPI library to adapt the ansi C library to a object oriented CPP environment with multithreading support that matches the queue based multithreading architecture of the H324 Server. The library has been designed to seperate ISDN/CAPI from other possible forms of transport (like TCP, Modem, Named pipes, Shared memory).

### Session Communication

Two base classes are the core of a single ISDN session: ByteStream and ByteStreamListener. the ByteStream is an interface that implements the sending of data through the ISDN link. The ByteStreamListener must be implemented by the receiver of data and is used to indicate the reception of new data and to indicate the status of buffering for the data sending.

As ISDN is a synchrounous communication medium (it can be assynch when using the LAPB layer within the CAPI library), the transmit buffer of the ISDN Session must always be filled. When the transmit buffer is insufficiently filled, the ISDN layer will stuff random bytes in the transport. When the transmit buffer is overfilled the ISDN layer will drop the data. A session should respond to the dataRequested() method call on its ByteStreamListener interface by replying using exactly one call to sendData on the ByteStream Object.

The ByteStream class is a base class that can be extended, the Capi version is just one of the possible implementations. Currently the folowing implementations exist:
1) CapiLogicalConnectionProxy
2) InternalByteStreamThread
3) TracingConnection
4) ReplayConnection
   Ad 1. CapiLogicalConnectionProxy is the normal implementation in a system using ISDN
   Ad 2. InternalByteStreamThread, On a system without ISDN some simple testing is possible by internally letting the server communicate withit self. The behaviour should be identical to the server calling itself.
   Ad 3. TracingConnection, For debugging purposses this class will store all the transmitted and received data in a file, while passing on the data to and from another ByteStream. One could compare this with the unix "tee" command that allows for logging data.
   Ad 4, ReplayConnection, For debugging purposses this class will read the file created by a racingConnection and mimmic the behaviour of the stored session.

### Creating a Session

The previous session assumed that some sort of Session object exists that corresponds to one session implements the ByteStreamListener interface and is registered to a ByteStream using the registerListener() method. This task is implemented by the ByteStreamController and the ByteStreamConnectionListener. Each from of StreamingTransport typically implements a SessionController that creates and administrates ByteStreams for each logical connection with another Session (A server side session communicates with a client side Session).

Typically two forms of creating sessions exist:
1) One calls the other party
2) One receives a call from an other party
   Ad 1) This function is executed by calling the makeConnection method on a ByteStreamController. The Controller creates the ByteStream, links it to the (physical) connection and notifies a registered ByteStreamConnectionListener of the new connection.
   Ad 2) When the ByteStreamController internally receives an event that a new connection is requested (The phone is ringing), it verifies that a ByteStreamConnectionListener has been registered, creates a new ByteStream that is linked to the new (physical) connection and notifies that ByteStreamConnectionListener of the new connection.

An application must implement an object that extends ByteStreamConnectionListener. In the H324 Server this is implemented by SessionController. It proxy SessionControllerProxy is registered in the base ByteStreamController.

Currently two types of ByteStreamController exist:
1) CapiController
2) InternalByteStreamController
   Ad1. This is the standard ISDN version of the ByteStreamController. It can create and receive calls. Basic support for LowerLayerBearerCapabilities is included: One can choose from 4 predefined BearerCapabilities (Speech(C), Binary data, HDLC framing(H), Binary data with H324m caps(D)) by appending the telephone number with the corresponding letter. For H324 all telephone numbers must be preceded with a D.
   Ad2. For debugging purposes two ByteStreams are created that are linked as one being the server side amd the other being the client side. An example of the use of this library can be found in CapiTest.cpp and CapiTest.h.

### SESSION ETC

At first we thought we needed several threads for one connection. Later we discovered that it suffices to have only the following threads:
- CAPI
- Multiplexer
- 1 to 3 AVRecorders

Having more separate threads means more overhead. We found that the AVPlayer can run in the same thread as the Multiplexer, because reading data from a file (our current AVPlayer implementation) is not a bottle neck for the other functionality in Multiplexer thread. The logic of the Session class and the accompanied classes is depictured in the file SESSION.GIF (@@ tobedone).

Roughly the classes can be grouped as follows:
- Multiplexer (lowest level protocol)
- AdaptationLayer (higher level protocol)
- Session (highest level protocol for control; H245)
- AVRecorder (highest level protocol for incoming audio/video)
- AVPlayer (highest level protocol for outgoing audio/video)

### Multiplexer

\SessionManager\Multiplexer.h(44):class ReceivingPdu
\SessionManager\Multiplexer.h(112):class Multiplexer: public ByteStreamListenerThread AdaptationLayer

For every connection, there is an array of outgoing AdaptationLayerOut objects, and an array of incoming AdaptationLayerln objects; one for every channel in use (up to a maximum of 6 channels). Both AdaptationLayerln and AdaptationLayerOut inherit from a generic AdaptationLayer class.

For the outgoing protocol we always define channel 0 as control channel, 2 for audio, and 3 for video. The use of the AdaptationLayerln objects is up to the terminal side. To keep an overview of the code, we defined some subclasses in the AdaptationLayerln class:
AdaptationLayerIn1Administration, AdaptationLayerln2Administration,
AdaptationLayerIn3Administration. Every AdaptationLayerOut always contains all 3 subclasses, because a channel can change its properties dynamically (in theory, a video channel can become an audio channel during a connection). These Administration classes have attributes that are specific for the Adaptation layer that is in use. Every AdaptationLayer contains a Cyclic PacketBuffer. This is a thread-safe cyclic buffer. The thread-safe capabilities are currently not used (all buffer manipulations occur in the same thread). Also, this CyclicPacketBuffer is not used for incoming audio/video channels (the data is forwarded to the AVRecorders directly, without buffering). An object can subscribe itself to a CyclicPacketBuffer by inheriting from CyclicPacketBufferListener and calling initCPBufferListener(). In that case, the callback function bufferNotEmpty() is called when something is written into the CyclicPacketBuffer.

In our MMM application, we only use this on the receiving side:
a Session subecribed itself to the buffer of the incoming control AdaptationLayer (number 0). On the outgoing side, the Multiplexer directly empties the buffer after calling AVPlayer::play() that should fill it.

### Session

The Session object was made for several purposes:
- handle H245 messages;
- hang up a call (e.g. in case of an error);
- control (create/delete, start/stop) all other objects.

In a late stage in making the software, we made Session a part of the Multiplexer thread. This means some of the control has been moved to the Multiplexer thread. Especially the code for cleaning up (deleting objects etc.) has become a bit messy now. For doing its H245 tasks, a Session object contains administration objects: MsdAdministration, MtAdministration, CeAdministration, LcAdministration, BlcAdministration (the latter two are derived from CapabilitiesAdministration). The names of these objects clearly refer to the H245 protocol (MSD, MT, etc.). They are all defined in one source file pair:
SessionAdministrations.h / SessionAdministrations.cpp.
AVRecorder and AVPlayer

From the AVRecorder and AVPlayer classes we derive classes that can handle specific audio and video protocols. We currenly have the following AVPlayers:
- SimpleAVPlayer: simply reads the bytes from a file

We currenly have the following AVRecorders:
- DebugAVRecorder: dumps bytes literally into a file
- AVRecorderForAVI: dumps bytes into a file in such a way that the file can be used by an AVI player;
- NamedPipeAVRecorder: dumps bytes into a named pipe, so a real-time player can show the video/audio on the (demo) screen. In the H245 protocol we need to tell the other side about our player capabilities. This data is stored in the class AVPlayerCapabilities. For our specific players we defined the derived classes: SimpleAVPlayerCapabilities and AmrAndMpeg4AVPlayerCapabilities.

### Main

The main MMM program is in the file ArenaMain.cpp. This file also contains some small class definitions to make the source clearer:IncomingSession, OutgoingSession, SessionController.

## Claims

1. Telecommunication system, comprising a circuit switched network (3) connected with mobile terminals (1), moreover comprising, for the transmission of streaming video content from a streaming video server (9) within the internet (5) to said mobile terminals, a gateway (7), connected to the circuit switched network at the one side and connected to the internet at the other side, said gateway being fit for the conversion of files having an internet compatible streaming video format received from said streaming video server, into streaming video bitstreams in a format fit to be transmitted to the mobile terminals via the circuit switched network said telecommunication system being **characterized by** comprising registration means (8), adapted to be connected with said mobile terminals via a packet switched network and fit for registering, for each relevant mobile terminal, a terminal identifier linked to the mobile terminal's node address at the circuit switched network.

2. Telecommunication system according to claim 1, the mobile terminals and the gateway at said one side, being fit for exchanging video bitstreams complying with a protocol for videoconferencing between mobile terminals.

3. Telecommunication system according to claim 2, said videoconferencing related protocol being the ITU H.324M protocol.

4. Telecommunication system according to claim 1, comprising means for retrieving, at the registration means, the circuit switched network node address, guided by the terminal identifier of the relevant mobile terminal requesting for the streaming video content from the streaming video server, means for setting up a connection through the circuit switched network between the gateway and the relevant mobile terminal requesting for the streaming video content, and means for transmitting said streaming video content, converted by said gateway, to the relevant mobile terminal requesting for the streaming video content.

5. Telecommunication system according to claim 4, the gateway, for setting up a connection through the circuit switched network between the gateway and the relevant mobile terminal requesting for the streaming video content, originating a call to the terminal of which the node address was retrieved in the registration means.

6. Telecommunication system according to claim 4, the terminal, for setting up a connection through the circuit switched network between the gateway and the relevant mobile terminal requesting for the streaming video content, originating a call to the gateway and the gateway investigating whether the originating terminal is the right one by matching the calling terminal's node address with the node address which was retrieved in the registration means.

7. Method for, in a telecommunication system, comprising a circuit switched network (3) connected with mobile terminals, transmitting streaming video content from a streaming video server (9) within the internet (5) to said mobile terminals, the method comprising a step of converting files having an internet compatible streaming video format received from said streaming video server, into streaming video bitstreams in a format fit to be transmitted to the mobile terminals via the circuit switched network, the method being **characterized by** comprising a step of registering at registration means (8), for each relevant mobile terminal, a terminal identifier linked to the mobile terminal's node address at the circuit switched network, wherein said registration means are adapted to be connected with said mobile terminals via a packet switched network.

8. Method according to claim 7, said format fit for transmission streaming video bitstreams to the mobile terminals via the circuit switched network complying with a protocol for videoconferencing between mobile terminals.

9. Method according to claim 8, said videoconferencing related protocol being the ITU H. 324M protocol.

10. Method according to claim 7, comprising a step of retrieving the circuit switched network node address, guided by the terminal identifier of the relevant mobile terminal requesting for the streaming video content from the streaming video server, setting up a connection through the circuit switched network to the relevant mobile terminal requesting for the streaming video content, and transmitting the streaming video content to that mobile terminal.

## Patentansprüche

1. Telekommunikationssystem, umfassend ein leitungsvermitteltes Netz (3), das mit mobilen Endgeräten (1) verbunden ist, ferner umfassend zur Übertragung von Streaming-Video-Inhalt von einem Streaming-Video-Server (9) im Internet (5) an die mobilen Endgeräte ein Gateway (7), das auf der einen Seite mit dem leitungsvermittelten Netz verbunden ist und das auf der anderen Seite mit dem Internet verbunden ist, wobei das Gateway fähig ist zur Konvertierung von Dateien mit einem Internetkompatiblen Streaming-Video-Format, die vom Streaming-Video-Server empfangen werden, in Streaming-Video-Bitströme in einem Format, das geeignet ist, um über das leitungsvermittelte Netz an die mobilen Endgeräte übertragen zu werden, wobei das Telekommunikationssystem **dadurch gekennzeichnet ist, dass** es Registrierungsmittel (8) umfasst, die ausgelegt sind, um über ein paketvermitteltes Netz mit den mobilen Endgeräten verbunden zu werden, und fähig sind, für jedes relevante Endgerät eine Endgerätekennung zu registrieren, die mit der Knotenadresse des Endgeräts im leitungsvermittelten Netz verknüpft ist.

2. Telekommunikationssystem nach Anspruch 1, wobei die mobilen Endgeräte und das Gateway auf der einen Seite fähig sind zum Austauschen von Videobitströmen, die einem Protokoll für Videokonferenz zwischen mobilen Endgeräten entsprechen.

3. Telekommunikationssystem nach Anspruch 2, wobei das videokonferenzbezogene Protokoll das ITU H.324M Protokoll ist.

4. Telekommunikationssystem nach Anspruch 1, umfassend Mittel zum Abrufen bei den Registrierungsmitteln der Knotenadresse im leitungsvermittelten Netz, geführt durch die Endgerätekennung des relevanten Endgeräts, das den Streaming-Video-Inhalt vom Streaming-Video-Server anfordert, Mittel zum Aufbauen einer Verbindung durch das leitungsvermittelte Netz zwischen dem Gateway und dem relevanten mobilen Endgerät, das den Streaming-Video-Inhalt anfordert, und Mittel zum Übertragen des Streaming-Video-Inhalts, der durch das Gateway konvertiert wird, an das relevante mobile Endgerät, das den Streaming-Video-Inhalt anfordert.

5. Telekommunikationssystem nach Anspruch 4, wobei das Gateway zum Aufbau einer Verbindung durch das leitungsvermittelte Netz zwischen dem Gateway und dem relevanten mobilen Endgerät, das den Streaming-Video-Inhalt anfordert, einen Ruf an das Endgerät einleitet, dessen Knotenadresse in den Registrierungsmitteln abgerufen wurde.

6. Telekommunikationssystem nach Anspruch 4, wobei das Endgerät zum Aufbau einer Verbindung durch das leitungsvermittelte Netz zwischen dem Gateway und dem relevanten mobilen Endgerät, das den Streaming-Video-Inhalt anfordert, einen Ruf an das Gateway einleitet, und das Gateway überprüft, ob das rufeinleitende Endgerät das richtige ist, indem es die Kontenadresse des rufenden Endgeräts mit der Knotenadresse vergleicht, die in den Registrierungsmitteln abgerufen wurde.

7. Verfahren zum Übertragen von Streaming-Video-Inhalt in einem Telekommunikationssystem, das ein leitungsvermitteltes Netz (3) umfasst, das mit mobilen Endgeräten verbunden ist, von einem Streaming-Video-Server (9) im Internet (5) an die mobilen Endgeräte, wobei das Verfahren einen Schritt des Konvertierens von Dateien mit einem Internetkompatiblen Streaming-Video-Format, die vom Streaming-Video-Server empfangen werden, in Streaming-Video-Bitströme in einem Format, das geeignet ist, über das leitungsvermittelte Netz an die mobilen Endgeräte übertragen zu werden, umfasst, und das Verfahren **dadurch gekennzeichnet ist, dass** es einen Schritt des Registrierens bei den Registrierungsmitteln (8) einer Endgerätekennung, die mit der Knotenadresse des mobilen Endgeräts im leitungsvermittelten Netz verknüpft ist, für jedes relevante Endgerät umfasst, wobei die Registrierungsmittel ausgelegt sind, um über ein paketvermitteltes Netz mit den mobilen Endgeräten verbunden zu werden.

8. Verfahren nach Anspruch 7, wobei das Format, das zur Übertragung von Streaming-Video-Bitströmen über das leitungsvermittelte Netz an die mobilen Endgeräte geeignet ist, einem Protokoll für Videokonferenz zwischen mobilen Endgeräten entspricht.

9. Verfahren nach Anspruch 8, wobei das videokonferenzbezogene Protokoll das ITU H.324M Protokoll ist.

10. Verfahren nach Anspruch 7, umfassend die folgenden Schritte: Abrufen der Knotenadresse im leitungsvermittelten Netz, geführt durch die Endgerätekennung des relevanten mobilen Endgeräts, das den Streaming-Video-Inhalt vom Streaming-Video-Server anfordert, Aufbauen einer Verbindung durch das leitungsvermittelte Netz mit dem relevanten mobilen Endgerät, das den Streaming-Video-Inhalt anfordert, und Übertragen des Streaming-Video-Inhalts an dieses mobile Endgerät.

## Revendications

1. Système de télécommunication, comprenant un réseau à commutation de circuit (3) connecté à des terminaux mobiles (1), comprenant en outre, pour la transmission de contenu vidéo de diffusion en continu d'un serveur vidéo de diffusion en continu (9) au sein de l'Internet (5) auxdits terminaux mobiles, une passerelle (7), connectée au réseau à commutation de circuit d'un côté et connectée à l'Internet de l'autre côté, ladite passerelle étant adaptée pour la conversion de fichiers ayant un format vidéo de diffusion en continu compatible Internet reçu dudit serveur vidéo de diffusion en continu, en flux de données vidéo de diffusion en continu sous un format adapté pour être transmis aux terminaux mobiles via le réseau à commutation de circuit, ledit système de télécommunication étant **caractérisé en ce qu'**il comprend un moyen d'enregistrement (8) adapté pour être connecté auxdits terminaux mobiles via un réseau à commutation de paquet et adapté pour l'enregistrement, pour chaque terminal mobile pertinent, d'un identifiant de terminal lié à l'adresse de noeud du terminal mobile au niveau du réseau à commutation de circuit.

2. Système de télécommunication selon la revendication 1, les terminaux mobiles et la passerelle audit un côté, étant adaptés pour échanger les flux de données vidéo respectant un protocole de vidéo conférence entre les terminaux mobiles.

3. Système de télécommunication selon la revendication 2, ledit protocole relatif à la vidéo conférence étant le protocole ITU H.324M.

4. Système de télécommunication selon la revendication 1, comprenant un moyen destiné à récupérer, au niveau du moyen d'enregistrement, l'adresse de noeud du réseau à commutation de circuit, guidé par l'identifiant de terminal du terminal mobile pertinent demandant le contenu vidéo de diffusion en continu du serveur vidéo de diffusion en continu, un moyen pour établir une connexion à travers le réseau à commutation de circuit entre la passerelle et le terminal mobile pertinent demandant le contenu vidéo de diffusion en continu, et un moyen pour transmettre ledit contenu vidéo de diffusion en continu, converti par ladite passerelle, au terminal mobile pertinent demandant le contenu vidéo de diffusion en continu.

5. Système de télécommunication selon la revendication 4, la passerelle, pour établir une connexion dans le réseau à commutation de circuit entre la passerelle et le terminal mobile pertinent demandant le contenu vidéo de diffusion en continu, émettant un appel au terminal duquel l'adresse de noeud a été récupérée dans le moyen d'enregistrement.

6. Système de télécommunication selon la revendication 4, le terminal, pour établir une connexion à travers le réseau à commutation de circuit entre la passerelle et le terminal mobile pertinent demandant le contenu vidéo de diffusion en continu, émettant un appel à la passerelle et la passerelle examinant si le terminal émetteur est le bon terminal en faisant correspondre l'adresse de noeud du terminal émetteur et l'adresse de noeud qui a été récupérée dans le moyen d'enregistrement.

7. Procédé destiné à, dans un système de télécommunication, comprendre un réseau à commutation de circuit (3) connecté à des terminaux mobiles, transmettre le contenu vidéo de diffusion en continu d'un serveur vidéo de diffusion en continu (9) au sein de l'Internet (5) auxdits terminaux mobiles, le procédé comprenant une étape consistant à convertir les fichiers ayant un format vidéo de diffusion en continu compatible Internet reçus dudit serveur vidéo de diffusion en continu, en flux de données vidéo de diffusion en continu sous un format adapté pour être transmis aux terminaux mobiles via le réseau à commutation de circuit, le procédé étant **caractérisé en ce qu'**il comprend une étape consistant à enregistrer au niveau du moyen d'enregistrement (8), pour chaque terminal mobile pertinent, un identifiant de terminal lié à l'adresse de noeud du terminal mobile au niveau du réseau à commutation de circuit, dans lequel ledit moyen d'enregistrement est adapté pour être connecté auxdits terminaux mobiles via à un réseau à commutation de paquet.

8. Procédé selon la revendication 7, ledit format adapté pour la transmission des flux de données vidéo de diffusion en continu aux terminaux mobiles via le réseau à commutation de circuit respectant un protocole de vidéo conférence entre les terminaux mobiles.

9. Procédé selon la revendication 8, ledit protocole apparenté à la vidéo conférence étant le protocole ITU H.324M.

10. Procédé selon la revendication 7, comprenant une étape consistant à récupérer l'adresse de noeud du réseau à commutation de circuit, guidée par l'identifiant de terminal du terminal mobile pertinent demandant le contenu vidéo de diffusion en continu du serveur vidéo de diffusion en continu, à établir une connexion dans le réseau à commutation de circuit au terminal mobile pertinent demandant le contenu vidéo de diffusion en continu, et à transmettre le contenu vidéo de diffusion en continu à ce terminal mobile.
